# DEMANDE DE BREVET EUROPEEN

(11) **EP 1 783 648 A1**
(43) Date de publication de la demande: **09.05.2007**
(21) Numéro de dépôt: 05109381.3
(22) Date de dépôt: 10.10.2005
(51) Int. Cl.: G06F 21/00

(54) **Microprocesseur sécurisé avec vérification des instructions**

(71) Demandeur: Nagracard S.A., 1033 Cheseaux-sur-Lausanne (CH)
(72) Inventeur: KUDELSKI, André, 1095, Lutry (CH)
(74) Mandataire: Wenger, Joel-Théophile

(57) **Abrégé**

Le but de la présente invention est de proposer une méthode et un dispositif afin de pallier aux dégâts qu'une désynchronisation du compteur de programme peut provoquer.

Ce but est atteint par un microprocesseur sécurisé comprenant une interface avec une mémoire de programme, cette mémoire comprenant des instructions, chaque instruction étant composée d'un opcode et pouvant comprendre un ou plusieurs opérants, ce microprocesseur étant caractérisé en ce qu'il comprend un module de vérification d'instruction, ce module comprenant des moyens de lecture d'une information de vérification définissant pour chaque instruction une valeur additionnelle de contrôle permettant de valider ou invalider la partie opcode de l'instruction.

## Description

### Introduction

La présente invention concerne le domaine des microprocesseurs, en particulier le domaine de la sécurisation de l'exécution du code dudit microprocesseur.

### Etat de la technique

Il est bien connu qu'une instruction est formée d'un opcode (ou identifiant d'instruction) et de zéro ou plusieurs opérants. Le premier octet d'une instruction ("opcode") joue un rôle important car cela définit la fonction souhaitée. Selon l'instruction, un ou plusieurs octets complémentaires seront nécessaires pour former une instruction.

Selon le type de processeur, la taille d'un opcode peut être de 8, 12, 16 ou 32 bits. Un opcode peut être également temporairement sur une plus grande longueur, par exemple une valeur de 18H pour le premier octet signifie que le deuxième octet définit l'instruction (voir liste d'instructions du 68HC11 par exemple.

Lorsqu'un processeur se désynchronise, par exemple suite à une erreur de programmation ou une perturbation extérieure, il se peut que son compteur de programme (PC) indique une position de la mémoire qui n'est pas un opcode mais un opérant.

| | | | | |
|---|---|---|---|---|
| F091 | 12 2D 78 11 | LF091: | BRSET | L002D,#%01111000, LF0A6 |
| F095 | CE F3 17 | | LDX | #$F317 |
| F098 | 18 1F 00 10 0B | | BRCLR | 0, Y, #%00010000, LFOAC |

Chaque instruction commence par un "opcode" et peut être suivie de plusieurs opérants. Lors du déroulement normal du programme, une instruction est chargée dans l'unité centrale, cette instruction a une longueur variant en fonction du opcode. Ainsi pour une instruction simple (NOP, INCA ...) aucun opérant n'est ajouté alors que pour une instruction plus compliquée (BRCLR) on peut trouver quatre opérants. Le système est très flexible et est basé sur le fait que chaque instruction en suit une autre. A la fin de l'exécution d'une instruction, le code suivant est nécessairement un opcode.

On imagine le dégât que peut provoquer l'exécution anarchique d'un programme qui débuterait aléatoirement, par exemple suite à des surtensions ou autres parasites.

Selon l'exemple ci-dessus, si le compteur de programme PC est chargé avec l'adresse F093, l'instruction qu'il va exécuter sera celle dont le opcode est 78H soit l'instruction

| | | | |
|---|---|---|---|
| F093 | 7811 CE | ASL | @$11CEh |
| F096 | F31718 | ADD | @$1718h |
| F099 | 1 F00 10 0B | BRCLR | 0, X, #00010000B, LFOAC |

La suite des codes exécutés est complètement aléatoire et incontrôlable. Les conséquences peuvent être dramatiques, par exemple effacer des données importantes, transmettre des clés de chiffrement.

### Brève description de l'invention

Le but de la présente invention est de proposer une méthode et un dispositif afin de pallier aux dégâts qu'une désynchronisation du compteur de programme peut provoquer.

Ce but est atteint par un microprocesseur sécurisé comprenant une interface avec une mémoire de programme, cette mémoire comprenant des instructions, chaque instruction étant composée d'un opcode et pouvant comprendre un ou plusieurs opérants, ce microprocesseur étant caractérisé en ce qu'il comprend un module de vérification d'instruction, ce module comprenant des moyens de lecture d'une information de vérification définissant pour chaque instruction une valeur additionnelle de contrôle permettant de valider ou invalider la partie opcode de l'instruction.

Ce module de vérification est directement implémenté dans le microprocesseur, et agit sur la partie de saisie d'une instruction ("fetch"). Lorsqu'une instruction est lue, l'information de vérification est lue en même temps. Cette information va permettre de déterminer si la première partie de l'instruction est un opcode. Pour cela deux modes de réalisation sont proposés :
- marquage de l'opcode
- signature de l'instruction

### Brève description de la figure

L'invention sera mieux comprise grâce à la description détaillée qui va suivre et qui se réfère au dessin annexé qui est donné à titre d'exemple nullement limitatif, décrivant une mémoire connectée au microprocesseur.

### Description détaillée de l'invention

Ainsi selon l'invention, le microprocesseur dispose de moyens pour vérifier que chaque octet (ou groupe d'octets si plus d'un octet est utilisé pour déterminer le début d'une instruction) qui est le début d'une instruction dispose d'un marqueur de vérification. Ce marqueur indique le début d'une instruction exécutable et interdit ainsi d'exécuter une instruction non conforme.

Un mode de vérification adapté au code exécuté par le microprocesseur concerne l'ensemble des octets formant une instruction.

Ainsi selon l'invention, une information de vérification est ajoutée à chaque bloc (un octet dans cet exemple) pour indiquer s'il s'agit d'un opcode ou d'un opérant. Pour un processeur de 8 bits, le codage du programme se fait dès lors sur 9 bits.

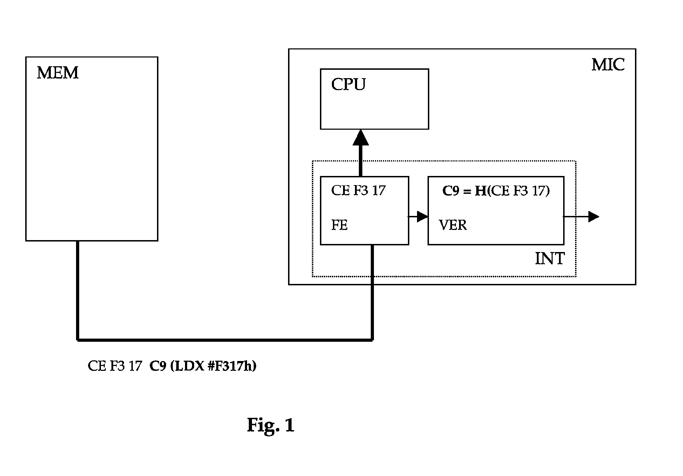

Lors de l'exécution du code, la partie en charge de transférer les instructions à l'unité centrale (module FE sur la figure 1) va lire l'instruction y compris le ou les bits de vérification. Lors du début de chaque instruction, le bit doit être à 1 (ou 0 selon la convention choisie) pour que l'instruction soit valide. La vérification se fera également pour contrôler que le bit de vérification est à 0 pour le ou les opérants.

Ainsi, si suite à une perturbation, le compteur de programme est défini à une adresse qui n'était pas prévue pour être une instruction, une erreur est générée suite à la vérification du bit de vérification.

| | | | |
|---|---|---|---|
| F091 | 112 02D 078 011 | LF091: | BRSET L002D, #%01111000, LF0A6 |
| F095 | 1 CE 0F3 017 | | LDX #$F317 |
| F098 | 118 01F 000 010 00B | | BRCLR 0, Y, #%00010000, LF0AC |

Chaque bloc est défini selon un format de 9 bits. Il va sans dire que lors d'utilisation de processeur de plus de 8 bits, soit 12 bits ou 16 bits ayant un format d'opcode de 12 ou 16 bits, le même principe est appliqué à savoir l'adjonction d'un bit par bloc de 12 ou 16 bits.

Si une erreur est détectée, c'est-à-dire que le processeur est en train de charger une instruction invalide (bit de vérification à zéro), cette instruction n'est pas exécutée et une erreur et générée, par exemple une interruption est émise.

Dans la routine d'interruption, les mesures sont prises par exemple l'effacement des données sensibles ou le blocage des voies de communication. Les données telles que des listes de définition, des constantes ou variables seront considérées comme des opérants, c'est-à-dire comme interdite à l'exécution.

Selon une variante de réalisation, le marqueur de vérification peut comprendre plus d'un bit et peut par exemple contenir une signature de l'instruction ou du opcode. La signature peut porter soit sur le opcode uniquement ou sur l'instruction complète. Cet exemple est illustré sur la figure 1. Le module FE lit une instruction complète, y compris l'information de vérification. Pour cela, il dispose d'une table définissant pour chaque premier octet lu (qui est censé représenter l'opcode) la longueur de l'instruction. Les octets sont dès lors lus en fonction de cette longueur. L'instruction est transmise au module de vérification VER qui va calculer la signature de cet ensemble de donnée et comparer le résultat avec l'information de vérification lue par le module FE. Si les deux données sont identiques, l'instruction est validée et peut être exécutée.

Dans le cas inverse, un signal d'erreur est généré qui est traité selon la manière choisie par le programmeur (reset, interruption, effacement de la mémoire etc..).

### Exemple de code avec signature:

| | | | |
|---|---|---|---|
| F091 | 12 2D 78 11 **4F** | LF091: | BRSET L002D, #%01111000, LF0A6 |
| F095 | CE F3 17 **C9** | | LDX #$F317 |
| F098 | 18 1F 00 10 0B **1B** | | BRCLR 0, Y, #%00010000, LF0AC |

Le processeur charge le premier octet qui va définir la longueur de l'instruction. Cette longueur initiale est additionnée de 1 afin de charger la signature. Selon notre exemple, la signature est placée en fin d'instruction mais pourrait être placée à un autre endroit pour autant que ce soit après l'opcode..

Dans cet exemple, 4F est la signature de l'instruction BRSET L002D, #%01111000, LF0A6 soit sur les octets 12 2D 78 11.

Cette signature est vérifiée lors de chaque exécution du programme. La probabilité pour qu'en cas de saut intempestif, la valeur de la signature soit correcte pour une instruction donnée est très faible.

Pour déterminer la signature, de nombreuses manières peuvent être utilisées comme un simple checksum, un CRC, un hash etc. Si l'on souhaite sécuriser davantage le procédé, il est possible d'exécuter un hash avec clé, la clé étant initialement chargée dans le processeur lors d'une phase d'initialisation.

Selon un mode de réalisation, la manière d'établir la signature est déterminée afin d'éviter toute possibilité de fausse authentification. Ceci est réalisé en déterminant une première manière de générer la signature et de vérifier tout le programme si une fausse instruction pouvait être authentifiée.

Pour cela, on décale le programme compteur pour pointer sur un opérant et on assume que cet opérant est un opcode. L'instruction correspondante est alors lue y compris la signature. On vérifie que cette signature est invalide.

| | | | |
|---|---|---|---|
| F093 | 78 11 4F **CE** | ASL | @$114F |

Cette portion de code est le résultat d'un décalage de 2 positions du compteur de programme sur l'exemple cité ci-dessus. Dans ce cas, les octets 78 11 4F forment l'instruction ASL @$114F et CE la signature. Du fait qu'il s'agit d'un cas de fausse instruction, on s'assure que CE n'est pas une signature valide des précédents octets (78 11 4F).

Ce procédé est répété pour tous les opérants et si une signature est par hasard correcte, la manière de déterminer la signature est modifiée et un nouveau cycle de vérification est effectué.

On assure ainsi que ce programme ne peut, par erreur, authentifier une fausse instruction.

Selon une version simplifiée de l'invention, la signature porte que sur l'opcode sans tenir compte des opérants.

### Exemple :

### Exemple de code avec signature:

| | | | |
|---|---|---|---|
| F091 | 12 **3C** 2D 78 11 | LF091: | BRSET L002D, #%01111000, LF0A6 |
| F095 | CE **6A** F3 17 | | LDX #$F317 |
| F098 | 18 **09** 1F 00 10 0B | | BRCLR 0, Y, #%00010000, LF0AC |

Chaque opcode est suivi d'une signature. Cette signature peut être le simple complément à1 de la valeur du opcode ou être le résultat d'une fonction mathématique.

## Revendications

1. Microprocesseur sécurisé (MIC) comprenant une interface (INT) avec une mémoire de programme (MEM), cette mémoire comprenant des instructions, chaque instruction étant composée d'un opcode et pouvant comprendre un ou plusieurs opérants, ce microprocesseur étant **caractérisé en ce qu'**il comprend un module de vérification d'instruction (VER), ce module comprenant des moyens de lecture d'une information de vérification additionnelle définissant pour chaque instruction une valeur de contrôle permettant de valider ou invalider la partie opcode de l'instruction.

2. Microprocesseur sécurisé (MIC) selon la revendication 1, **caractérisé en ce que** l'information de vérification comprend au moins deux états et indique si la partie de l'instruction considérée est un opcode.

3. Microprocesseur sécurisé (MIC) selon la revendication 1, **caractérisé en ce qu'**il comprend des moyens pour lire des constantes ou des variables dans la mémoire, l'information de vérification liées à ces constantes ou variables étant différente de celle d'un opcode.

4. Microprocesseur sécurisé (MIC) selon la revendication 1, **caractérisé en ce que** l'information de vérification additionnelle représente une signature sur tout ou partie de l'instruction.

5. Microprocesseur sécurisé (MIC) selon la revendication 4, **caractérisé en ce que** la signature est calculée sur toutes les parties de l'instruction, la signature étant lue après l'instruction.

6. Microprocesseur sécurisé (MIC) selon la revendication 4, **caractérisé en ce que** la signature est calculée sur toutes les parties de l'instruction, la signature étant lue après l'opcode.

7. Microprocesseur sécurisé (MIC) selon la revendication 4, **caractérisé en ce que** la signature est calculée sur l'opcode de l'instruction.

8. Microprocesseur sécurisé (MIC) selon les revendications 1 à 7, **caractérisé en ce qu'**il comprend des moyens pour interrompre l'exécution du programme si l'opcode supposé en cours de lecture est invalidé.
